# EUROPEAN PATENT APPLICATION

(11) **EP 1 760 124 A1**
(43) Date of publication of application: **07.03.2007**
(21) Application number: 06119772.9
(22) Date of filing: 30.08.2006
(51) Int. Cl.: C09D 11/10, C09D 11/00

(54) **A method for printing a substrate with radiation curable ink, and an ink suitable for application in the said method**

(30) Priority: 01.09.2005 EP 05107997
(71) Applicant: Océ-Technologies B.V., 5914 CA Venlo (NL)
(72) Inventor: WETJENS, Peter M. A., 5975 TE, Sevenum (NL); VERCOULEN, Gerardus C.P., 5941 EA, Velden (NL); OGRINC, Hendrik J.A., 5941 JK, Velden (NL); PELZERS, Ronald J.H.M.C., 6085 DM, Horn (NL)
(74) Representative: Janssen, Paulus J. P.

(57) **Abstract**

The invention pertains to a method for printing a substrate (12c) with radiation curable ink comprising providing the substrate on a support, providing an inkjet print head (14c) at an operating temperature, jetting droplets of the curable ink from the inkjet print head onto the substrate, controlling the interaction between the ink and the substrate, and then curing the ink received on the substrate by directing radiation toward the substrate, wherein the said controlling is provided for by applying an ink comprising a carrier composition and an agent that is able to reversibly gel the carrier composition, which agent is soluble in the carrier composition at the operating temperature of the inkjet print head and gels the ink when it is received on the substrate. The invention also pertains to an ink for enabling the use of the said method and a printer adapted for applying the method.

## Description

The invention pertains to a method for printing a substrate with radiation curable ink comprising providing the substrate on a support, providing an inkjet print head at an operating temperature, jetting droplets of the curable ink from the inkjet print head onto the substrate, controlling the interaction between the ink and the substrate, and then curing the ink received on the substrate by directing radiation toward the substrate. The invention also pertains to an ink suitable for application in the said method and a printer for applying the method.

Such a method is known from European patent EP 1 349 733, issued November 10th, 2004 as well as from US patent 6,145,979 issued November 14th, 2000. Radiation curable inks have become widely considered in recent years as the ink of choice for printing a wide variety of non-coated, non-porous substrates. In particular, UV-curable inks or electron beam curable inks are well known in the art. In general, but not necessarily, these inks are based on a carrier composition comprising ethylenically unsaturated monomer or oligomeric binders that polymerise under the influence of radiation to form a cured binder. The use of radiation curing enables the ink to quickly cure (commonly considered as "instant drying") without the need to drive off large quantities of water or other solvents. As a result, radiation curable inks can be used in high speed inkjet printers that can achieve production speeds of over 100 square meters per hour. It is a common desire that the same printer can be used to print a wide variety of substrates, each image printed being of the same high quality regardless of the type of substrate being used. However, it is known i.a. from the patents cited here-above that a given ink formulation may interact differently with different types of substrates. Thus, it is quite possible that the quality of the final printed image (being either two-dimensional or three-dimensional) may be significantly impaired when the composition of the substrate is changed from one type to another. In the prior art, methods have been devised that control the interaction between the ink and the substrate before the ink is finally cured. In particular, the dwell time between the moment of impact of the ink on the substrate and the moment of curing is controlled in order to achieve a desired interaction between the substrate and the not-yet cured ink.

This way, the spread of the ink droplets in and over the substrate can be controlled in order to acquire a desired dot gain. The prior art methods however has important disadvantages. For each combination of a specific ink and a specific substrate a particular dwell time has to be determined such that an optimal dot gain can be acquired. Given the vast amount of different media types that are available today, it will hardly be possible to predetermine dwell times for each and every ink-substrate combination. Next to this, even if such dwell times can be determined beforehand, it will be necessary to devise a printer that can handle dwell times that may vary from a few tenths of seconds up to several minutes in order to acquire the optimal dot gain for each and every ink-substrate combination. Such a printer is relatively expensive and prone to less reliability due to the complicated constitution enabling the different dwell times.

It is an object of the present invention to overcome or at least mitigate the above described problems. To this end, a printing method according to the preamble has been devised, characterised in that the said controlling is provided for by applying an ink comprising a carrier composition and an agent that is able to reversibly gel the carrier composition, which agent is soluble in the carrier composition at the operating temperature of the inkjet print head and gels the ink when it is received on the substrate. This invention relies on the use of an agent that is able to gel the carrier composition of the radiation curable ink. Gelling the carrier composition in fact means that the agent thickens the carrier composition by forming a three-dimensional structure therein. The carrier composition is then considered as being a gel. It appears that by gelling the carrier composition of the ink, the interaction with the substrate is dominated by the spreading behaviour of the ink as such. In other words, the type of substrate appears to be only of very minor importance for the ultimately acquired dot gain. Surprisingly it further appears that the type of ink (actually the type of carrier composition) is also of minor importance in the spreading behaviour. We have found that once the ink is gelled, it is the gel-structure that in fact dominates the spreading behaviour. This leads to the very favourable result that ink as well as substrate characteristics do no longer dominate the ultimately acquired dot gain. In practice, this means that the dwell time can be chosen practically the same for every type of ink-substrate combination. This greatly simplifies the printing method and corresponding printer.
A gelling agent in general can consist inter alia of high and low molecular compounds, a mixture of compounds, or of discrete particles. The molecules or particles of the gelling agent so interact with one another that a network is formed in the carrier composition.

During this network formation, it is in principal not necessary for the molecules or particles of which the gelling agent consists to be actually chemically bonded or have physical contact. All that is required is that they should have a physical interaction such as to result in a reinforcing effect in the liquid. As a result the viscosity of the liquid increases without it passing over into an actual solid phase. It is noted that it cannot be unambiguously determined beforehand whether a compound can serve as a gelling agent in a carrier composition. This depends i.a. on the interactions between the gelling agent and the carrier composition. Whether an agent can gel a carrier composition has to be determined by experiment, for example by analytical measurement such as described in US 6,471,758 (column 8, line 35 to column 9, line 59; with reference to figures 1 to 3).
The present invention makes use of a gelling agent but is restricted to the use of gelling agents that are soluble in the carrier composition at the operating temperature of the inkjet print head. This appears to be a very important feature of the present invention. It is believed that this contributes significantly to the stability of the ink in the inkjet print head at the operating temperatures. In general, if the gelling agent forms a second phase in the ink at the operating temperature, this gives rise to unstable and unpredictable processes when printing the ink from an inkjet print head, which typically has multiple miniaturised ink chambers for jetting the ink droplets. In particular, if the gelling agent consists of insoluble particles, there is a tendency of these particles to coagulate and clogg the print head ink chambers. According to the present invention, the gelling agent is soluble in the carrier composition at the operating temperature of the print head and gels the ink when it is received on the substrate. Another important aspect of the present invention is that the gelling agent gels the ink reversibly. Since in ink jet printing the ink might stay in the print head for a relatively long period, during which the print head is brought several times to its operating temperature (for example every morning at start up), the gel structure that might arise in the ink when the printer is turned off, must be broken when the print head is brought back to its operating state.

It is noted that from US 6,467,897 a radiation curable ink is known containing a thickening agent. This ink however comprises 10-20% of particulate matter that acts as the thickening agent. This ink is therefore less or almost unsuitable for inkjet printing. From US 6,605,652 it is known that a gelling agent can be added to a UV-curable ink. However, it is not known from this patent that the gelling agent should be soluble in the carrier composition at the operating temperature of the print head, nor that the gelling agent has to be able to reversibly gel the ink in order to be practically suitable for inkjet printing.

In an embodiment of the invention, the substrate is provided on the support at a first temperature below the operating temperature of the print head. In this embodiment the print head itself is operated at a temperature above the substrate temperature (typical room-temperature). This has the advantage that inks can be used that have a relatively large viscosity at room temperature. The inks namely are heated to the operating temperature upon which their viscosity is decreased to enable the drop formation process in the ink jet print head. The relatively large viscosity at room temperature means that there is a further increase in the viscosity of the ink, next to the gelling effect, when the ink is received on the cooler substrate. This further decreases the influence of ink and substrate characteristics on the acquired dot gain.

In a further embodiment, the difference between the first temperature and the operating temperature is at least 30 degrees Celsius. It surprisingly appears that when the difference is over 30°C, there is a remarkably larger choice of suitable gelling agents that are soluble in the carrier composition at the operating temperature of the print head. Next to this, the large difference in temperature enables the use of carrier compositions that comprise radiation curable compounds of relatively large molecular weight. Large compounds inherently are less dangerous for the health of people than small compounds. Small compounds are more volatile and can more easily pass into the body of humans. The higher operating temperature provides a low operating viscosity, even when the ink comprises relatively large molecules. Additionally, the gelling process appears to be very fast in this embodiment.

In an embodiment of the invention, the gelling agent is able to thermally reversible gel the carrier composition. In this embodiment, the gelling agent is chosen such that the gel structure can be broken simply by raising the temperature of the ink. This enables a reliable use of the ink, without the need of additional means to break the gel structure such as ultrasonic probes or other mechanical means.
In a further embodiment, the thermally reversible gelling action is based on physical interaction between molecules of the gelling agent. It appears that physical interactions can arise and be broken relatively fast, which is very advantageous when applying the ink in an inkjet printer. Next to this, this embodiment ensures a rapid formation of the gel which further decreases the influence of ink and substrate characteristics as such on the dot gain.
In an even further embodiment, the molecules form a crystalline network in the carrier composition when the gelling action takes place. It appears that this further improves the gelling action and thus improves the ultimately printing quality to be acquired.

In an embodiment the gelling agent is radiation curable. This embodiment has the particular advantage that the gelling agent itself is also curable by the use of radiation. This means that the gelling agent will become part of the ultimately cured composition, thus strongly reducing the risk that this agent will migrate in, or even separate from the cured ink on the substrate. This greatly improves the durability of the ultimate printed images.

In an embodiment, the ink received on the substrate is subjected to a physical treatment before it is cured. In this embodiment the ink is physically treated between the moment of impact on the substrate and curing by the influence of radiation. This provides for an opportunity to fine tune the spread of the ink before it is actually cured. Different levels of spread are for example needed depending on the use of the printed image. This embodiment enables to influence the dot gain without the need of changing the amount or type of gelling agent in the ink. Preferably, the physical treatment comprises the transfer of heat and/or the application of pressure. It appears that the use of heat, or pressure or both (for example by using a fuser roller well known in the art of printing) adequately enables to fine-tune the dot gain.

In an embodiment, the print head is scanned over the substrate on a scanning carriage, and the ink of a predetermined area of the substrate is not cured until the scanning of the said area of the substrate is completed. The use of a gelling agent enables the complete printing of an area of the substrate with the ink, without the need of intermediate curing. This has a very important advantage. In the prior art namely, intermediate curing between different print stages is often applied to avoid that the ink spreads too much over and in the substrate. This means however that some ink droplets are jetted on already cured ink droplets, whereas others are jetted on not yet cured ink droplets. This gives rise to local differences in the appearance of the printed image, i.a. caused by different degrees of coalescence of the droplets, which is very disturbing when high quality images are desired. In the present embodiment, the interaction between printed (but not yet cured) ink droplets is consistent over the whole substrate since newly jetted ink droplets are always neighboured by the same type of gelled but uncured ink droplets. This greatly improves the print quality that can be achieved by jetting radiation curable inks. In a preferred embodiment the radiation is sent from a source that is mounted separately from the print head. This avoids the need of scanning the radiation source together with the print head.

The invention also pertains to a radiation curable ink comprising a carrier composition and an agent that is able to thermally reversible gel the carrier composition, which agent is soluble in the carrier composition at first temperature and gels the carrier composition when it is cooled to a second temperature beneath the first temperature. Typical gelling agents are high-molecular elongated molecules which form an elastic network in a carrier composition, the interstices of the network being filled with the carrier composition which can be in a liquid or a solid state. If the carrier composition in the interstices is in a liquid state, a gel arises which has some fluid-like properties, such as the property that molecules can diffuse relatively easily into the continuous liquid matrix and some solid-like properties such as the property that the gel can withstand a certain shear stress without deformation occurring, before the gel starts to flow like a liquid. When the liquid in the interstices of the network solidifies or cures, the gel passes over to the solid state.

In an embodiment of the ink according to the invention, the gelling agent comprises molecules with an weight-averaged molecular weight of less than 5000, in particular less than 1000, preferably less than 500. Since radiation curable inks of themselves are typically more viscous than water based or other solvent inks, the addition of a small quantity of well known high-molecular gelling agents such as carragenan, laminarane, pectin and gums such as arabic, xanthane and guar gums can lead to an unacceptably high viscosity at the operating temperature of the print head, which means that there is an adverse effect on the jetting properties of the ink. Oligomer gelling agents, i.e. gelling agents with a molecular weight less than 5000 are therefore preferably used, so that the gelling agent does not have an adverse effect on the viscosity of the ink composition. In a further preferred embodiment, low-molecular gelling agents are used, i.e. gelling agents with a molecular weight less than 1,000 or even 500. The fact that these oligomer and low-molecular compounds can have gelling properties despite their relatively low molecular weight can be explained as follows. In the case of oligomer and low-molecular gelling agents, the molecules of this agent are believed to separate from the carrier composition on an adequate reduction of the temperature, and form long compound chains via mutual (typical non-covalent) interactions, said chains possibly behaving in the same way as the high-molecular polymers in the previously mentioned well known gelling agents. When the gel is heated up, the interactions between the molecules of the gelling agent are interrupted and a sol re-forms. A supplementary advantage of the use of oligomer and low molecular gelling agents is that the gel-sol transition takes place relatively quickly, because for this transition it is only necessary to break the relatively weak non-covalent bonds between the compound molecules of the polymer chains. In addition, small molecules will solve homogeneously in the carrier composition more rapidly.

In an embodiment the ink comprises less than 10%, preferably less than 5% by weight of the gelling agent. This has the advantage that the agent itself is of less influence on the properties, in particular the mechanical properties, of the ultimately cured ink. This is even stronger the case when the gelling agent is radiation curable itself as explained here-above.

In another embodiment, an uncured gelled carrier composition de-gels at room temperature. In this embodiment, the gelling agent is chosen such that at room temperature, a gelled but uncured ink slowly de-gels. This has the advantage that the ink, on its way from the factory to the client will not stay in a gelled state. Such a gelled state namely means that the ink is very viscous, which means that there are less ways of getting the ink out of its container into the printing machine. A slow transformation in to a normal liquid state at room temperature practically ensures that the ink is ungelled when it arrives at a printer for refilling purposes. Since the process of de-gelling is slow, typically taking from a few hours to several days, the gelling action is still adequate for providing control of the interaction between ink and substrate during the printing process. Thus, the advantages of the present invention are fully preserved in this embodiment.

The invention will now be explained in more detail by using the following figures and

### examples.

Figure 1 is a schematic, perspective view showing a portion of a prior art inkjet printing apparatus, wherein the apparatus in this instance is a roll-to-roll vertical inkjet printer.
Figure 2 is a schematic end elevational view of another prior art inkjet printing apparatus, wherein the apparatus in this instance is a rotatable drum inkjet printer.
Figure 3 is a schematic, perspective view showing a portion of an inkjet printing apparatus according to one embodiment of the present invention, wherein the apparatus in this instance is a flatbed inkjet printer.
Figure 4 is a schematic, perspective view showing a portion of an inkjet printing apparatus according to a second embodiment of the present invention.

Example 1 illustrates an ink for use according to the invention.

Example 2 illustrates a second ink for use according to the invention.

### Figure 1

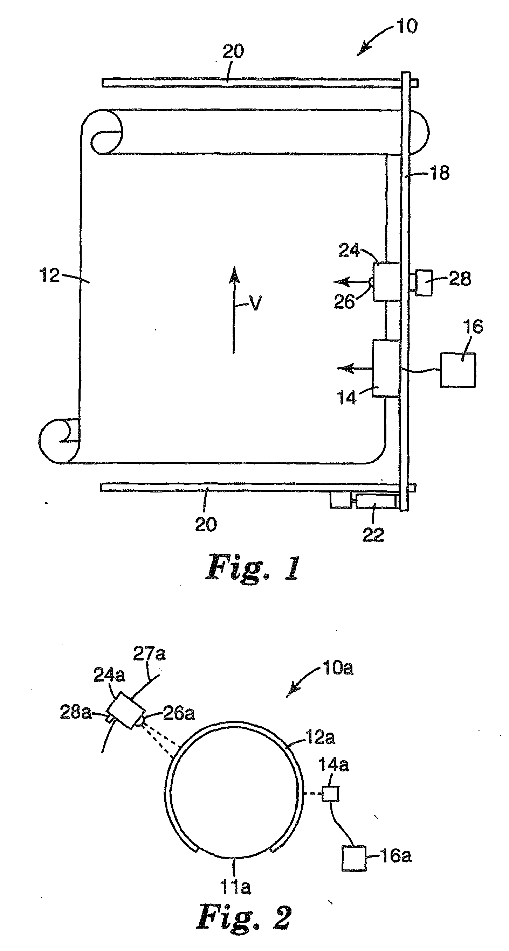

Figure 1 illustrates certain components of a prior art inkjet printing apparatus using radiation curable inks. This apparatus has been extensively described in EP 1 349 733 in paragraphs [0021] to [0043] which paragraphs are incorporated completely herein by reference. This apparatus comprises a vertical support plate behind substrate 12, which substrate moves in upward direction V. An inkjet print head 14 extend across the plate and is operable to direct radiation curable ink such as ultraviolet (UV) curable ink onto the substrate as it moves across the plate. In practice, the print head 14 is operable to print at least four inks of different colours so that a wide colour spectrum in the final printed image can be obtained.
The print head 14 is coupled to a controller 16 for selective activation when desired. Controller 16 also controls the movement of the substrate drive system (not shown). The print head 14 is mounted on a carriage 18 which is movable in horizontal direction across the width of the substrate to print a row of dots of the desired image. The carriage 18 is movable along two rails 20 that extend in parallel horizontal directions. A stepping motor 22 is operable to shift the carriage 18 along the rails 20. Motor 22 is connected to controller 16 for timed, selective activation of the motor 22 as may be needed. A curing device 24 is also mounted on the carriage 18. The curing device 24 includes one or more sources of radiation, each of which is able to emit light in the ultraviolet spectrum. Suitable sources are for example mercury and xenon lamps, carbon arc lamps, tungsten filament lamps, lasers, LED's and the like. In this particular embodiment the curing device includes one single UV lamp 26. The curing device includes a shield (not shown) that extends substantially over lamp 26 in order to ensure that only the portion of the substrate that lies directly beneath the lamp is irradiated. The curing device is connected to controller 16 and is mounted on the carriage for movement in vertical direction. Stepping motor 28 is connected to curing device 24 for moving the latter in a direction either away from or towards the print head 14. Controller 16 includes a computer for determining a desired dwell time for the ink received on the substrate, based on characteristics of the ink and substrate used. This dwell time represents the time interval between the time that the ink is received on the substrate 12 and the time that the substrate receives radiation from curing device 24. Once the desired dwell time is calculated, motor 28 is energised as necessary to shift the curing device 24 either towards or away from the print head 14. As an alternative, the dwell time may be varied by changing the speed of advancement of substrate 12. In this embodiment, motor 28 is not needed. Disadvantage of this embodiment is that the output speed of the apparatus depends on the particular ink-substrate combination.

### Figure 2

Figure 2 illustrates a prior art printing apparatus 10a, which comprises a rotatable drum 11a. This drum is rotatable around a central horizontal reference axis. The drum 11a is coupled to a transport system for moving it around its axis, wherein the rotation is controlled by using controller 16a. A substrate 12a is received over the external surface of drum 11a. The apparatus also includes a print head 14a for jetting radiation curable ink. The apparatus 10a includes a curing device 24a for directing UV radiation towards ink that is received on the substrate 12a. Lamp 26a of the curing device is connected to controller 16a for activation and deactivation as needed. The curing device 24a is coupled to a pair of guide rails 27a, one of which is shown in figure 2. The rails extend in an arc about the rotational axis of the drum 11a. A motor 28a is operably connected to the curing device 24a and the rails 27a for moving the curing device 24a along the rails 27a as desired. The motor 28 a is also connected to the controller for operation.
As can be appreciated by reference to figure 2, the motor 28a is operable to move the UV lamp 26a in directions either towards or away from the print head 14a. As such, the dwell time of the ink received on the substrate 12a can be varied by operation of motor 28a. Alternatively, the dwell time may be varied by changing the start and stop times of the rotational movement of the drum 11a.

### Figure 3

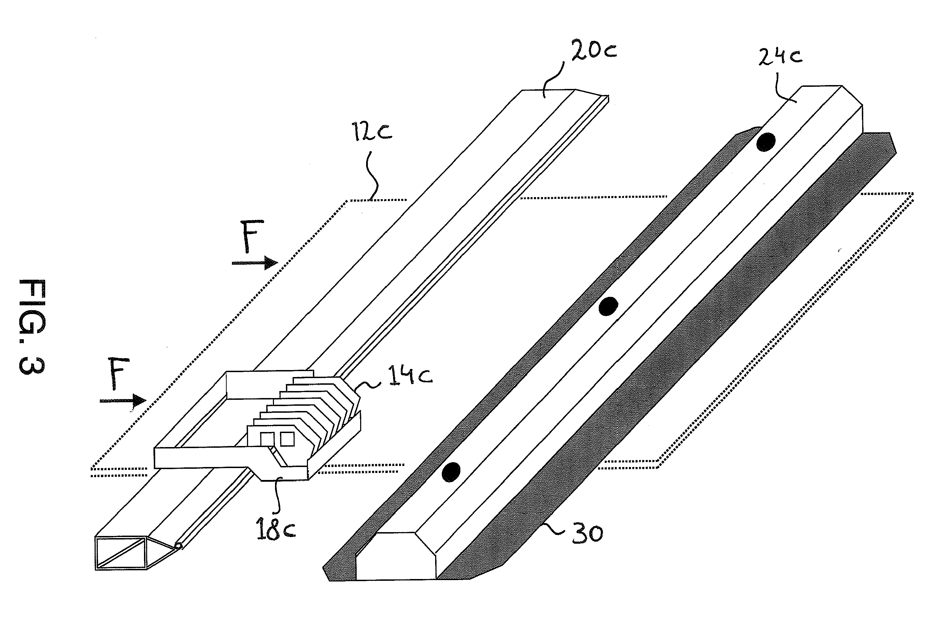

Figure 3 illustrates certain components of an inkjet printing apparatus using radiation curable inks according to the present invention. In this embodiment the printer is a flatbed printer, capable of printing a large flat panel 12c. The printer comprises a carriage 18c that is guided on a rail system 20c for reciprocal movement in a direction substantially perpendicular to the direction F. Carriage 18c is provided with eight print heads 14c, each comprising a different colour in this embodiment, viz. cyan, magenta, yellow and black as well as diluted versions of each of these colours.
Upon printing an image on the panel 12c, the carriage is reciprocally moved over the guide rail 20c in order to provide one strip of the panel with rows of ink droplets. In this case, the complete image as intended for this strip is printed. Since the ink contains an agent that gels the ink droplets as soon as they are received on the substrate, they do not adversely coagulate, spread or bleed into the panel 12c. After printing of the said strip is completed, the panel is moved in the direction F such that a next strip neighbouring the strip that has just been printed faces the print heads 14c. Then, the next strip of panel 12c is printed with ink droplets. The printer is provided with a curing device 24c, which comprises several lamps (not shown) that are able to emit light in the ultraviolet spectrum towards the panel 12c. The curing device is foreseen with shields 30 that prevent the UV light from being scattered over the panel to its surroundings, in particular to the print heads. When a printed strip with uncured ink passes underneath the curing device 24c, radiation is emitted towards the panel, sufficient for curing the ink located on that strip. Curing device 24c is a stationary device that is not movable with respect to the guide rail 20c. The dwell time of the ink droplets is therefore substantially the same for all droplets.

### Figure 4

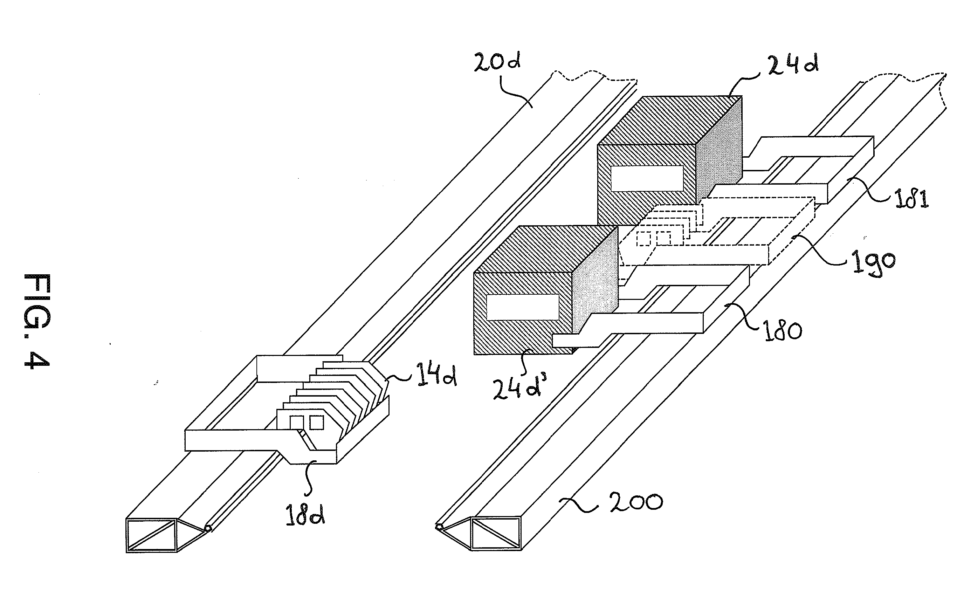

Figure 4 illustrates a second embodiment of a printer according to the invention. The most relevant parts of the printer are depicted in figure 4. This printer is provided with a carriage 18d that is provided with eight print heads 14d, the carriage being connected to guide rail 20d for reciprocal movement across a substrate (not shown). This is the same constitution as is the case with the printer according to figure 3. The printer comprises a second guide rail 200. To this guide rail carriages 180 and 181 are connected. These carriages are provided with curing devices 24d' and 24d respectively, each of the devices comprising a mercury lamp (not shown) for emitting radiation towards the substrate. The carriages can be reciprocated across the substrate by corresponding guidance over the rail 200. Optionally the printer comprises an additional carriage 190 which carries an additional print head or set of print heads that is in communication with a source of clear ink or other material that lacks colour, or even coloured ink. The clear ink can be used to improve performance of the finished product, such as by improving durability, gloss, resistance to graffiti and the like. The coloured ink, for example white pigmented ink, might for example be used to apply spot colour having a dedicated customised tone.

### Examples of radiation curable inks

Radiation curable carrier compositions to constitute inks suitable for inkjet printing have been known in the prior art for some time and may comprise for example compositions based on acrylates or thiolenes, which compositions can be cured by providing radicals on emitting radiation. Other known compositions can be cured by providing cat-ions on emitting radiation to the composition. Mixtures of various compositions are also known in the prior art. Typical radiation types that are used for curing are ultraviolet light and electron beams. UV-curing starts off with initiating a reaction by the emission of light in the ultraviolet spectrum. A photoinitiating agent absorbs the UV-light which causes e.g. the formation of radicals or ions. Electron beam curing is based on the ability of such beams to split chemical bonds, which causes the formation of free radicals and ions. These particles on their turn cause the initiating of a curing reaction. All these processes are well known in the prior art.
UV-curable inks are typically based on a carrier composition that comprises acrylate monomers and oligomers. Well known acrylates in this respect are for example epoxy acrylates, urethane acrylates, polyester acrylates, silicone acrylates, acrylated dendrimers, polyether acrylates and mono or multiple polyolacrylates. In general the carrier composition comprises di- (or even multiple) functional acrylates such that polymer chains (and networks) can be formed in the curing process. The compound 1,6-hexanediol-acrylate is commonly applied. Alkoxylated compounds such as 1,6-hexanediol-ethoxylate-diacrylate are also known for their use in UV-curable inks and have the advantage of being less dangerous to the health of mammals. The same is true for dimerised acrylates. It is believed that alkoxylated, dimerised acrylates are the least dangerous for one's health. Next to the acrylates, the composition generally comprises a photoinitiator. Pigments or other colourants are commonly used in these inks for enabling marking purposes. Other ingredients that are commonly known in the art of inks, such as biocides, dispersants, humectants, viscosity modifying agents, surfactants etc. can be applied as necessary.
Next to the acrylate type radiation curable inks, inks are known that are based on epoxides, oxetanes and vinylethers such as Bisphenol A epoxides, cycloalipatic epoxides, iso-polyols, alifatic-, aromatic- and alifatic-urethane vinylethers. The latter types can also be cured by using the combination of UV-light and an appropriate photoinitiator (e.g. diaryliodonium or triarylsulfonium salts) which upon absorbing the UV light generates ions. Carrier compounds used regularly are for example limoneen dioxide, bis{[1-ethyl(3-oxetanil)]methyl}ether, bis-(3-4-epoxycyclohexylmethyl)adipate, 3-ethyl-3-phenoxymethyl-oxetane, 3-ethyl-3-[(2-ethylhexyloxy)methyl] oxetane, and 3-ethyl-3-hydroxymethyl-oxetane. Photoinitiators commonly used with these compounds are Esacure 1187 and Chivacure 1172. Many photosensitisers are known for these initiators and can be found i.a. among the anthracene-, xanthone-, thiazine-, acridine-, and porphorine-derivates. Particular compounds are for example 1,6 diphenyl-1,3,5 hexatriene, pyrene and perylene.
Radiation curable inks for use in the method according to the invention comprise an agent that can gel the carrier composition when the ink is received on the substrate. Here-beneath, specific examples are given of inks in which the present invention is embodied.

### Example 1

A UV-curable ink has been made that is based on a carrier composition comprising 36,5 weight % 1,6-hexanediol-ethoxylate-diacrylate (see formula 1 here-beneath), 36,5 weight % di-trimethylolpropane tetraacrylate (see formula 2), 18 weight % N-vinylcaprolactam (see formula 3) and 9 weight % of the photoinitiator 2 para tolyl-2-(dimethylamino)-4'-morfolinobutyrofenon available (at Ciba Specialty Chemicals, Basel, Switzerland) under the tradename lrgacure 379. To this carrier composition 1.5 parts per hundred parts carrier composition (1.5 phr) carbon black is added as a marking material. This carbon black is available as Nipex 150 at Degussa AG Germany, and is dispersed using Solsperse 39000 (1 part per part carbon black) and Solsperse 5000 (1 part per 4 parts Carbon black) both available from Noveon Inc., USA with 2-butanone as the dispersing medium. Next to this 1.5 phr stearon (i.e. (C₁₇H₃₅)₂C=O) is added as a gelling agent. Note that stearone as a compound for inkjet inks is known as such. However, in combination with this particular carrier composition it acts as a gelling agent which is hitherto unknown. Lastly 500 ppm methoxyhydroquinon is added as an inhibitor.

### Formula 1 (n = 2):

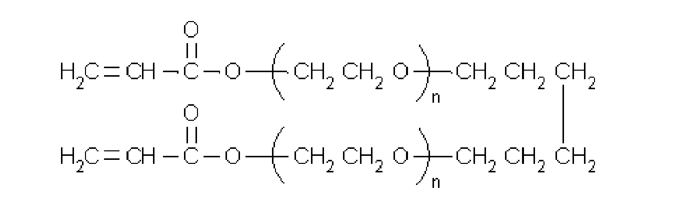

### Formula 2:

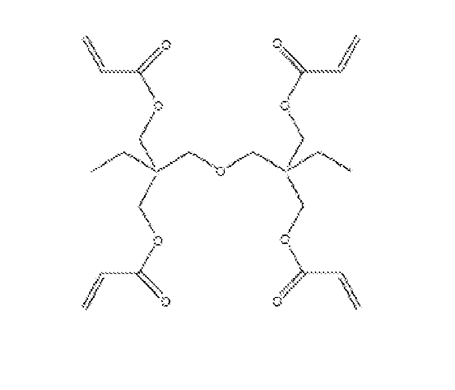

### Formula 3:

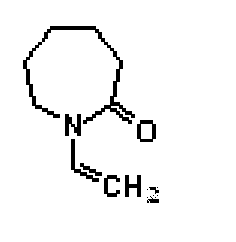

This ink can be used at an operating temperature of 70°C (for example in the printers according to figures 3 and 4), at which temperature the stearone is just solved in the carrier composition. If needed, some excess stearone that does not solve at the operating temperature can be removed by filtration before the ink is used in the inkjet printing head. If the ink is jetted onto a substrate that has a temperature of about 25°C, the ink will rapidly transform into a gelled state. This avoids too much spread, coalescence between neighbouring ink droplets and bleed into the substrate. Other ink formulations based on the same carrier composition were made by using as a gelling agent octadecane-amide, stearylstearamide and Ceridust TP 5091 (available at Clariant, Muttenz, Switzerland) The latter gelling agent is UV curable and will cure together with the carrier composition.

### Example 2

A second UV-curable ink has been made that is based on a carrier composition comprising 4.9 weight % Limoneen dioxide (LDO) (available from Arkema Inc, Philadelphia, USA), 24.9 weight % Bis{[1-ethyl(3-oxetanil)]methyl}ether (available as OXT-221 from DKSH-Market Intelligence, Zurich, Switzerland), 20.0 weight % Bis-(3-4-epoxycyclohexylmethyl)adipate (available as UVR-6128 from Dow Chemicals, Horgen, Switzerland), 32.35 weight % (m/m) 3-ethyl-3-phenoxymethyl-oxetane (available as OXT-211 from DKSH-market intelligence, Zurich, Switzerland). The carrier composition further comprises 1.25 weight % Carbon black, 1.5 % 2-ethyl-9,10-dimethoxy anthracene (available from Sigma-Aldrich, St.-Louis, USA), 15% Photoinitiator Chivacure 1172 (available from Double Bond Chemical, Tapei Taiwan) and 0.1 % Byk UV3510 (available from Byk Chemie GmbH, Wesel, Germany). As a gelling agent 2 phr stearon is added. This ink can be used in the same way as the ink described under example 1.

## Claims

1. A method for printing a substrate with radiation curable ink comprising
- providing the substrate on a support,
- providing an inkjet print head at an operating temperature,
- jetting droplets of the curable ink from the inkjet print head onto the substrate,
- controlling the interaction between the ink and the substrate, and then
- curing the ink received on the substrate by directing radiation toward the substrate,
**characterised in that** the said controlling is provided for by applying an ink comprising a carrier composition and an agent that is able to reversibly gel the carrier composition, which agent is soluble in the carrier composition at the operating temperature of the inkjet print head and gels the ink when it is received on the substrate such that the ink droplets sufficiently spread over the substrate to provide an adequate interaction with the substrate.

2. A method according to claim 1, **characterised in that** the substrate is provided on the support at a first temperature below the operating temperature.

3. A method according to claim 2, **characterised in that** the difference between the first temperature and the operating temperature is at least 30 degrees Celsius.

4. A method according to any of the preceding claims, **characterised in that** the agent is able to thermally reversible gel the carrier composition.

5. A method according to claim 4, **characterised in that** the thermally reversible gelling action is based on physical interaction between molecules of the gelling agent.

6. A method according to claim 5, **characterised in that** the molecules form a crystalline network in the carrier composition when the gelling action takes place.

7. A method according to any of the preceding claims, **characterised in that** the gelling agent is radiation curable.

8. A method according to any of the preceding claims, **characterised in that** the ink received on the substrate is subjected to a physical treatment before it is cured.

9. A method according to claim 8, **characterised in that** the physical treatment comprises the transfer of heat and/or the application of pressure.

10. A method according to any of the preceding claims, wherein the print head is scanned over the substrate on a scanning carriage, **characterised in that** the ink of a predetermined area of the substrate is not cured until the scanning of the said area of the substrate is completed.

11. A method according to claim 10, **characterised in that** the radiation is sent from a source that is mounted separately from the print head.

12. A radiation curable ink comprising a carrier composition and an agent that is able to thermally reversible gel the carrier composition, which agent is soluble in the carrier composition at first temperature and gels the carrier composition when it is cooled to a second temperature beneath the first temperature.

13. An ink according to claim 12, **characterised in that** the gelling agent comprises molecules with an weight-averaged molecular weight of less than 5000, in particular less than 1000, preferably less than 500.

14. An ink according to any of the claims 12 and 13, **characterised in that** the ink comprises less than 10%, preferably less than 5% by weight of the gelling agent.

15. An ink according to any of the claims 12 to 14, **characterised in that** the gelling agent is a crystalline compound.

16. An ink according to any of the claims 12 to 15, **characterised in that** the gelling agent is radiation curable.

17. An ink according to any of the claims 12 to 16, **characterised in that** an uncured gelled carrier composition de-gels at room temperature.

18. An inkjet printer adapted to carry out the method according to one of the claims 1 to 11.
